# EUROPÄISCHE PATENTSCHRIFT

(11) **EP 1 262 363 B1**
(45) Veröffentlichungstag und Bekanntmachung des Hinweises auf die Patenterteilung: **26.07.2006**
(21) Anmeldenummer: 02011990.5
(22) Anmeldetag: 30.05.2002
(51) Int. Cl.: B60N 3/10

(54) **Haltering für Getränkehalter in Fahrzeugen zum Einstellen von Trinkgefässen mit unterschiedlichen Aussendurchmessern**
Support ring for beverage containers in vehicles with adjustment for drink containers of different outside diameter
Anneau support pour un récipient de boisson pour véhicules pour s'adapter aux récipients de boissons de diamètre extérieur différent

(30) Priorität: 01.06.2001 DE 20109247 U
(43) Veröffentlichungstag der Anmeldung: 04.12.2002
(73) Patentinhaber: KTSN Kunststofftechnik Sachsen GmbH & Co. KG, 01796 Pirna (DE); AUDI AG, 85045 Ingolstadt (DE)
(72) Erfinder: Meissner, Mario, 01097 Dresden (DE); Schupp, Steffen, 01099 Dresden (DE); Hack, Thorsten Dr., 85057 Ingolstadt (DE)
(74) Vertreter: Tragsdorf, Bodo

(56) Entgegenhaltungen:
- DE-A- 4 432 036
- DE-A- 19 533 304
- DE-A- 19 937 356
- DE-U- 29 616 554
- US-A- 5 259 579
- "VEHICLE BEVERAGE HOLDER HIDES UNTIL READY FOR USE" RESEARCH DISCLOSURE, KENNETH MASON PUBLICATIONS, HAMPSHIRE, GB, Nr. 390, 1. Oktober 1996 (1996-10-01), Seite 670 XP000639937 ISSN: 0374-4353

## Beschreibung

Die Erfindung betrifft einen Haltering für Getränkehalter in Fahrzeugen zum Einstellen von Trinkgefäßen mit unterschiedlichen Außendurchmessern.

Es gibt bereits eine Vielzahl an Getränkehaltern für Trinkgefäße in Kraftfahrzeugen, die aus einem Haltering und einer Abstellfläche für das aufzunehmende Gefäß bestehen. Die Durchmesser handelsüblicher Trinkgefäße liegen in einem Bereich von ca. 50 bis 90 mm. Zum Ausgleich der lichten Weite beim Einstellen von Gefäßen unterschiedlicher Durchmesser ist es bekannt, Ausgleichsorgane, wie z.B. Federn oder andere elastische Elemente, einzusetzen.

Aus der DE 44 32 036 A1 ist es bekannt, als Ausgleichsorgane vorstehende Lappen aus einem elastischen Werkstoff einzusetzen, die Bestandteil einer in ihrem Innenbereich ausgeschnittenen Scheibe sein können. Als elastischer Werkstoff wird Silikonkautschuk eingesetzt. Der Nachteil dieser Lösung besteht darin, daß die Lappen beim Einstellen des Gefäßes nach unten gebogen werden und sich dadurch die Spannhöhe verringert. Durch die heruntergebogenen Lappen wird das Herausnehmen des Gefäßes erschwert, da die Lappen eine Art "Widerhaken" bilden. Außerdem besitzen die sogenannten "Lappen" aus einem Elastomer ein ungünstiges Gleitverhalten beim Einstellen bzw. Herausnehmen des Gefäßes.

Der Erfindung liegt die Aufgabe zugrunde, einen Haltering für Getränkehalter in Fahrzeugen zum Einstellen von Trinkgefäßen mit unterschiedlichen Außendurch-messern zu schaffen, der unabhängig vom Außendurchmesser bzw. von der Außenkontur des Gefäßes eine stabile und sichere Halterung gewährleistet, die gestellten hohen Anforderungen beim Einstellen und Entnehmen des Gefäßes erfüllt und nur einen geringen Bauraum erfordert.

Erfindungsgemäß wird die Aufgabe durch die im Anspruch 1 angegebenen Merkmale gelöst. Geeignete Ausgestaltungsvarianten sind Gegenstand der Ansprüche 2 bis 12. Das elastische Ausgleichsorgan besteht aus einem textilen Material und einer elastischen Seele, wobei das textile Material so angeordnet ist, daß es beim Einstellen des Gefäßes mit diesem in Berührungskontakt steht. Der Haltering kann verschiedenartig ausgebildet sein und besteht in der Regel aus einem Kunststoffbauteil mit einer zentralen Öffnung. An dem die zentrale Öffnung begrenzenden Randabschnitt sind das bzw. die Ausgleichsorgane in geeigneter Weise befestigt, z. B. mittels eines Klemmringes, durch Schweißen oder Kleben oder Anformen. Durch die radiale Länge der Ausgleichsorgane wird der Einstellöffnungsbereich für die Gefäße definiert. Die Halteringe können auch als Haltearme ausgebildet sein, an denen die elastischen Ausgleichsorgane befestigt sind.

Durch den Einsatz eines textilen Materials ergeben sich im Vergleich zu einem elastomeren Ausgleichsorgan mehrere Vorteile. Das textile Material kann bei einer relativ großen Oberflächenhärte weich eingestellt werden. Dadurch wird zwischen dem Gefäß und dem textilen Material eine sehr gute Gleitwirkung erzielt, ohne nachteilige Auswirkungen auf die stabile Halterung des Gefäßes. Das Einstellen und Entnehmen des Gefäßes wird dadurch erleichtert. Das textile Material, das mit einer elastischen Seele ausgerüstet ist, geht infolge der guten Gleitwirkung nach dem Einstellen des Gefäßes problemlos wieder in seine Ausganghöhe zurück, so daß die vorgegebene Haltehöhe unverändert erhalten bleibt. Das textile Material kann als Textilring in seiner Steifigkeit unterschiedlich ausgebildet werden und z.B. in radialer Richtung eine hohe Zugsteifigkeit und in Umfangsrichtung eine niedrige Steifigkeit aufweisen. Dadurch wird beim Einstellen des Gefäßes der Textilring nicht zu weit nach unten, in Bodenrichtung, gedehnt.

An die elastischen Ausgleichsorgane für Halterungsvorrichtungen für Trinkgefäße werden verschiedene Anforderungen gestellt. Beim Einstellen der Gefäße müssen die Ausgleichsorgane eine bestimmte Haltekraft ausüben, um das Gefäß sicher zu halten. Zu berücksichtigen ist dabei, daß die Haltekräfte nicht zu hoch sein dürfen, da bestimmte Trinkgefäße, wie z.B. Becher aus Pappe oder Polystyrol, sehr dünnwandig ausgebildet sind. Die Aufnahme von Quer- und Längsbeschleunigungskräften der Gefäße soll so sein, daß in allen Richtungen gleiche Kräfte aufgenommen werden. Ein Auftreten von Kippmomenten ist unbedingt zu vermeiden. Zum Entnehmen der Gefäße sollen nur geringe Kräfte erforderlich sein. Schnappbewegungen der elastischen Ausgleichsorgane sind zu vermeiden. Außerdem sollen die Ausgleichsorgane abwaschbar und hautsympathisch sein. Die vorgeschlagenen elastischen Ausgleichsorgane erfüllen diese Voraussetzungen weitestgehend.

Das textile Material kann durch Wirken oder Stricken von synthetischen Fasern oder Fasergemischen, vorzugsweise auf der Basis von Polyamid oder Polyester, hergestellt werden. Im Bereich des Öffnungsrandes sollte das textile Material gefaltet sein, da ansonsten ein erforderliches Umsäumen sich nachteilig auf die Elastizität auswirkt. Das textile Material besitzt werkstoffseitig bereits eine bestimmte Elastizität. Die erforderliche hohe Elastizität des Ausgleichsorgans wird zusätzlich durch eine elastische Seele unterstützt. Die elastische Seele kann verschiedenartig ausgebildet sein. So kann z. B. in einen Textilring ein Elastomerring eingesetzt werden. Eine andere vorteilhafte Variante besteht darin, in das textile Material Elastomerfäden einzubinden. Möglich ist auch eine Beschichtung oder Beflockung eines Elastomerringes mit textilem Material, zumindest der Flächen, die mit dem Gefäß in Berührungskontakt gelangen.

Das Ausgleichsorgan kann auch aus mehreren sich überlappenden sichelförmigen Segmenten aus gefalztem textilem Material bestehen, wobei die elastische Sehne als Sehne in dem Falz angeordnet ist. Eine weitere Variante besteht darin, das Ausgleichsorgan aus mehreren ringförmigen Abschnitten aus textilem Material zu bilden, die radial mittels einer elastischen Naht miteinander verbunden werden. Die elastische Naht bildet dabei die elastische Seele.

Das textile Material ist vorzugsweise bei einigen der vorgenannten Varianten mehrlagig ausgebildet.

Es besteht auch die Möglichkeit, das textile Material in Form eines Schlauchabschnittes in dem Haltering zu befestigen. Der Schlauchabschnitt besitzt umfangseitig eine Einschnürung, die durch die elastische Seele entweder in Form eines Elastomerringes oder als elastomere Beschichtung erzielt wird.

Ein weiterer Vorteil des vorgeschlagenen Halteringes besteht darin, daß dieser auch zum Einstellen von Behältnissen mit einer quadratischen oder rechteckförmigen Querschnittsfläche, wie z. B. sogenannten Tetrapacks, sehr gut geeignet ist.

Die Erfindung soll nachstehend an einigen Beispielen erläutert werden. In der zugehörigen Zeichnung zeigen
- Fig. 1: eine erste Ausführungsvariante des Halteringes mit einem elastischen Ausgleichsorgan als Draufsicht,
- Fig. 2: einen Schnitt gemäß der Linie A-A in Fig. 1,
- Fig. 3: eine zweite Ausführungsvariante des Halteringes mit einem elastischen Ausgleichsorgan als Draufsicht,
- Fig. 4: einen Schnitt gemäß der Linie A-A in Fig. 3,
- Fig. 5: eine dritte Ausführungsvariante des Halteringes mit einem elastischen Ausgleichsorgan als Draufsicht,
- Fig. 6: einen Schnitt gemäß der Linie A-A in Fig. 5,
- Fig. 7: eine vierte Ausführungsvariante des Halteringes mit einem elastischen Ausgleichsorgan als Draufsicht,
- Fig. 8: einen Schnitt gemäß der Linie A-A in Fig. 7,
- Fig. 9: eine fünfte Ausführungsvariante des Halteringes mit einem elastischen Ausgleichsorgan als Draufsicht und
- Fig. 10: einen Schnitt gemäß der Linie A-A in Fig. 9.

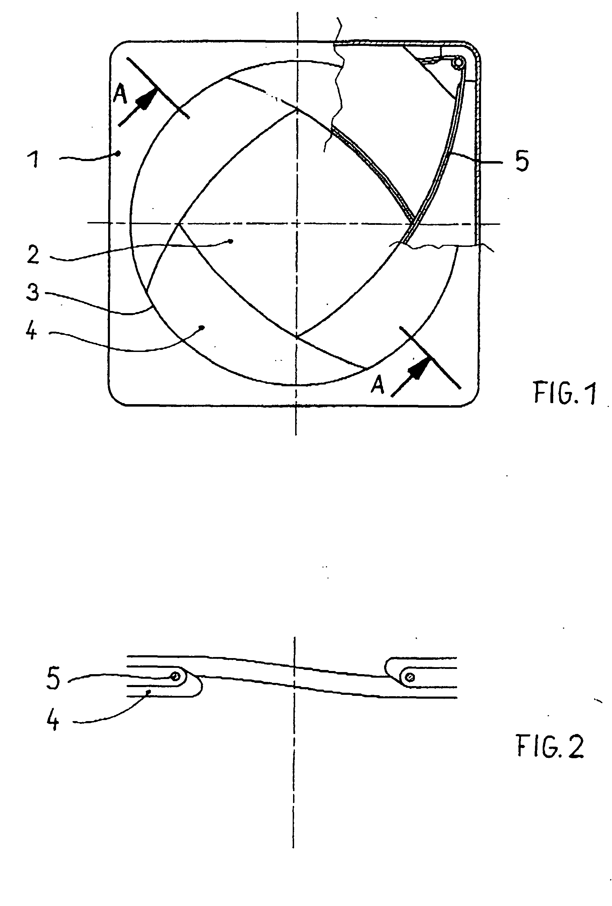

Die in den Figuren 1 bis 10 gezeigten Halteringe bestehen aus einem Kunststoffbauteil 1 mit einer zentralen kreisrunden Einstellöffnung 2 zum Einstellen eines Gefäßes. Die Halteringe sind Bestandteil von sogenannten Cupholdern in Kraftfahrzeugen. An dem die Einstellöffnung 2 begrenzenden Rand 3 der Halteringe sind die entsprechenden elastischen Ausgleichsorgane in an sich bekannter Weise befestigt. Durch die radiale Länge der Ausgleichsorgane wird der Öffnungsbereich zum Einstellen von Gefäßen unterschiedlicher Außenabmessungen definiert. Die Ausgleichsorgane bestehen aus einem textilen Material und einer elastischen Seele. Das textile Material ist durch Wirken oder Stricken von Polyamid- oder Polyesterfasern hergestellt.

In den Figuren 1 und 2 ist eine Ausführungsvariante gezeigt, bei der das elastische Ausgleichsorgan aus vier sichelförmigen Segmenten 4 aus textilem Material besteht, wobei sich die jeweiligen Endabschnitte überlappen. Das textile Material der Segmente 4 ist einmal gefaltet. Die Falten begrenzen die Einstellöffnung 2 für die Gefäße und gelangen mit diesen in Berührungskontakt. In der Falz eines jeden Segmentes 4 ist eine elastische Sehne 5 angeordnet, die jeweils in den gegenüberliegenden Ecken des Kunststoffbauteiles 1 befestigt bzw. eingespannt ist, wie der in Fig.1 gezeigte Ausschnitt der oberen rechten Ecke verdeutlicht. Die elastischen Sehnen 5 können auch auf eine andere geeignete Art und Weise befestigt werden. Das textile Material besitzt nur eine geringe Elastizität. Dieser Haltering ist besonders gut für einen großen Durchmesserausgleich geeignet.

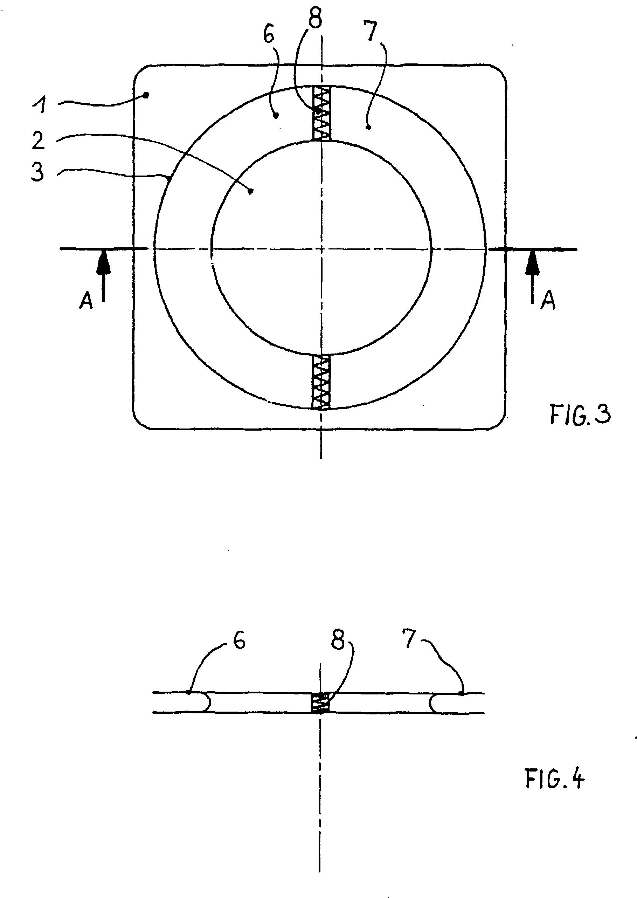

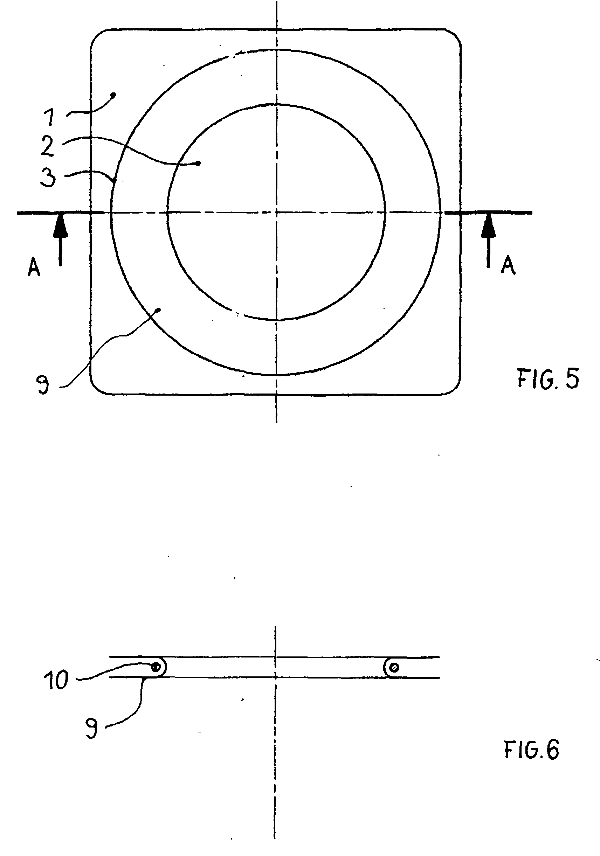

Bei dem in den Figuren 3 und 4 gezeigten Haltering 1 besteht das Ausgleichsorgan aus zwei halbkreisförmigen Ringabschnitten 6 und 7, die mittels eines flexiblen Fadenmaterials miteinander verbunden sind. Die elastische Seele wird durch die beiden Nähte 8 gebildet. In diesem Fall besitzt das textile Material eine hohe Eigenelastizität, wodurch nur ein geringerer Durchmesserausgleich ermöglicht wird. Das textile Material wird zweilagig, also gefaltet, eingesetzt, da es ansonsten erforderlich wäre den Öffnungsrand zu umsäumen, wodurch die Elastizität stark eingeschränkt würde. Die Variante gemäß den Figuren 5 und 6 besteht aus einem textilen Schlauch 9 als Ausgleichsorgan, der mit einem elastischen Ring 10 zusammengeschnürt ist. Die durch das Raffen entstehende Faltenbildung ist abhängig von der Elastizität des eingesetzten textilen Materials und nimmt mit zunehmender Elastizität ab. Dieser Haltering ist für einen relativ großen Durchmesserausgleich geeignet.

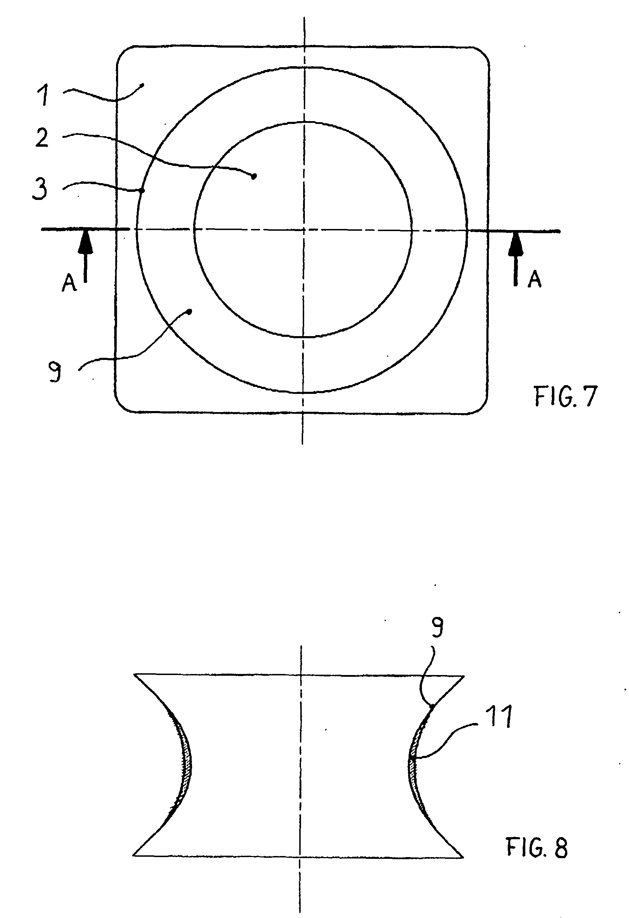

In den Figuren 7 und 8 ist ebenfalls ein Ausgleichsorgan in Form eines textilen Schlauches 9 gezeigt, der am Außenumfang mit einer elastischen Beschichtung 11 versehen ist, die so aufgetragen ist, daß der textile Schlauch 9 in seinem mittleren Bereich eingeschnürt ist. Der textile Schlauch 9 ist mit seinem oberen Endabschnitt an dem Haltering 1 befestigt. Infolge der größeren Bauhöhe des Schlauches 9 besitzt dieses Ausgleichsorgan besonders gute anwendungstechnische Eigenschaften.

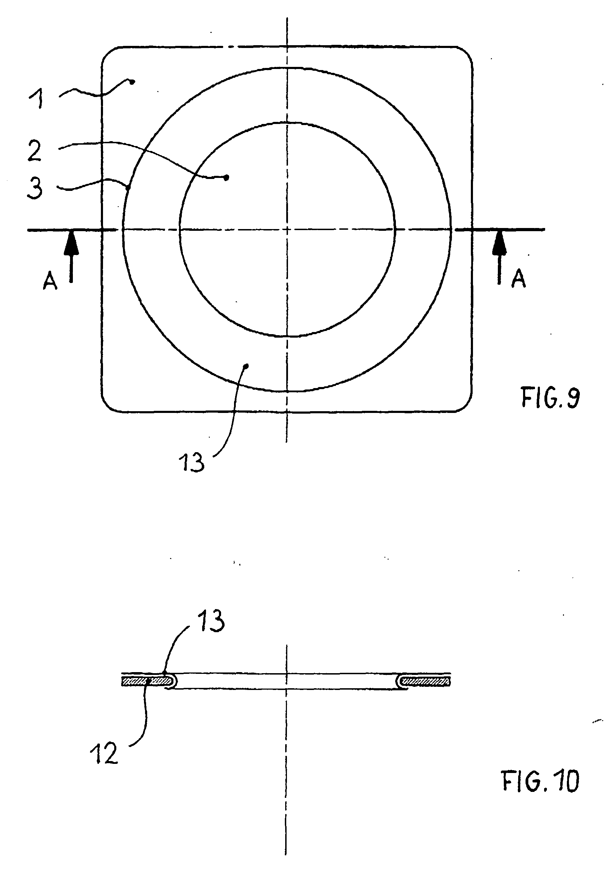

In den Figuren 9 und 10 ist ein Ausgleichsorgan gezeigt, das aus einem Elastomerring 12 besteht, der mit einer Beschichtung 13 aus textilem Material versehen ist.

## Patentansprüche

1. Haltering für Getränkehalter in Fahrzeugen zum Einstellen von Trinkgefäßen mit unterschiedlichen Außendurchmessem, mit einem die Einstellöffnung begrenzenden elastischen Ausgleichsorgan, **dadurch gekennzeichnet, daß** das Ausgleichsorgan aus einem textilen Material (4, 6, 7, 9, 13) und einer elastischen Seele (5, 8, 10, 11, 12) besteht, wobei das textile Material (4, 6, 7, 9, 13) beim Einstellen des Gefäßes mit diesem in Berührungskontakt steht.

2. Haltering nach Anspruch 1, **dadurch gekennzeichnet, daß** das textile Material (4, 6, 7, 9, 13) durch Wirken oder Stricken von synthetischen Fasern oder Fasergemischen gebildet ist.

3. Haltering nach einem der Ansprüche 1 oder 2, **dadurch gekennzeichnet, daß** die Fasern oder Fasergemische aus Polyamid oder Polyester bestehen.

4. Haltering nach einem der Ansprüche 1 bis 3, **dadurch gekennzeichnet, daß** die elastische Seele aus einem Elastomerring (10, 12) besteht.

5. Haltering nach Anspruch 4, **dadurch gekennzeichnet, daß** der Elastomerring (12) mindestens an der mit dem einzustellenden Gefäß in Berührung kommenden Fläche mit textilem Material (13) beschichtet oder beflockt ist.

6. Haltering nach einem der Ansprüche 1 bis 5, **dadurch gekennzeichnet, daß** die Seele aus Elastomerfäden besteht, die in das textile Material eingebunden sind.

7. Haltering nach einem der Ansprüche 1 bis 6, **dadurch gekennzeichnet, daß** das textile Material (4, 6, 7, 9) in seiner Steifigkeit richtungsabhängig ausgebildet ist und eine hohe Zugsteifigkeit in radialer Richtung und eine geringe Steifigkeit in Umfangsrichtung besitzt.

8. Haltering nach einem der Ansprüche 1 bis 7, **dadurch gekennzeichnet, daß** das Ausgleichsorgan aus mehreren sich teilweise überlappenden sichelförmigen Segmenten (4) aus gefalztem textilem Material besteht und die elastische Seele als Sehne (5) in dem Falz angeordnet ist.

9. Haltering nach einem der Ansprüche 1 bis 8, **dadurch gekennzeichnet, daß** das Ausgleichsorgan aus mindestens zwei ringförmigen Abschnitten (6, 7) aus textilem Material besteht, und die Seele durch Nähte (8) aus flexiblem Material gebildet ist, mit der die Abschnitte (6, 7) radial verbunden sind.

10. Haltering nach einem der Ansprüche 1 bis 9, **dadurch gekennzeichnet, daß** das Ausgleichsorgan aus einem als Schlauchabschnitt (9) ausgebildeten textilen Material besteht, und die elastische Seele durch eine am Außenumfang des Schlauchabschnittes (9) angebrachte, die Mantelfläche einschnürende Beschichtung (11) aus einem elastomeren Material gebildet ist.

11. Haltering nach einem der Ansprüche 1 bis 9, **dadurch gekennzeichnet, daß** das Ausgleichsorgan aus einem als Schlauchabschnitt (9) ausgebildeten textilen Material besteht, und die elastische Seele durch einen am Außenumfang des Schlauchabschnittes anliegenden, die Mantelfläche einschnürenden elastomeren Ring (10) gebildet ist.

12. Haltering nach einem der Ansprüche 1 bis 11, **dadurch gekennzeichnet, daß** das textile Material (4) aus mehreren Lagen besteht.

## Claims

1. Holding ring for holders of drinks containers in motor vehicles for the insertion of drinks containers of different outside diameters with an elastic compensating element bordering the insertion opening, **characterized in that** the compensating element consists of a textile material (4, 6, 7, 9, 13) and an elastic core (5, 8, 10, 11, 12) where the textile material (4, 6, 7, 9, 13) comes into contact with the container when the latter is inserted.

2. Holding ring according to claim 1, **characterized in that** the textile material (4, 6, 7, 9, 13) is produced by warp knitting or knitting synthetic fibres or fibre mixtures.

3. Holding ring according to claims 1 or 2, **characterized in that** the fibres or fibre mixtures consist of polyamide or polyester.

4. Holding ring according to one of the claims 1 to 3, **characterized in that** the elastic core consists of an elastomer ring (10, 12).

5. Holding ring according to claim 4, **characterized in that** the elastomer ring (12) is coated or flocked with textile material (13) at least on the surface coming into contact with the container to be inserted.

6. Holding ring according to one of the claims 1 to 5, **characterized in that** the core consists of elastomer threads woven into the textile material.

7. Holding ring according to one of the claims 1 to 6, **characterized in that** the rigidity of the textile material (4, 6, 7, 9) is formed anisotropically with a high tensile strength in a radial direction and a low rigidity in a circumferential direction.

8. Holding ring according to one of the claims 1 to 7, **characterized in that** the compensating element consists of several crescent-shaped segments (4), some of which overlap, made of folded textile material with the elastic cord positioned as a cord in the fold.

9. Holding ring according to one of the claims 1 to 8, **characterized in that** the compensating element consists of at least two ring-shaped sections (6, 7) made of textile material, that the core is formed by seams (8) made of flexible material and that the sections (6, 7) are radially connected with the core.

10. Holding ring according to one of the claims 1 to 9, **characterized in that** the compensating element consists of a textile material formed as a tube section (9) and that the elastic core is formed by a coating (11) made of an elastomer material which is applied to the outer circumference of the tube section (9) constricting its circumferential area.

11. Holding ring according to one of the claims 1 to 9, **characterized in that** the compensating element consists of a textile material formed as a tube section (9) and the elastic core is formed by an elastomer ring (10) lying on the outer circumference of the tube section constricting its circumferential area.

12. Holding ring according to one of the claims 1 to 11, **characterized in that** the textile material (4) is multi-layered.

## Revendications

1. Anneau de fixation pour porte-boissons placés dans les véhicules automobiles, destiné à loger des contenants à boisson présentant des diamètres extérieurs différents et muni d'un organe de compensation élastique délimitant l'orifice de logement, **caractérisé en ce que** l'organe de compensation est composé d'un matériau textile (4, 6, 7, 9, 13) et d'un noyau élastique (5, 8, 10, 11, 12), le matériau textile (4, 6, 7, 9, 13) étant en contact avec le contenant lorsque celui-ci est posé.

2. Anneau de fixation selon la revendication 1, **caractérisé en ce que** le matériau textile (4, 6, 7, 9, 13) est formé par tissage ou tricotage de fibres synthétiques ou de mélanges de fibres.

3. Anneau de fixation selon l'une quelconque des revendications 1 ou 2, **caractérisé en ce que** les fibres ou les mélanges de fibres se composent de polyamide ou de polyester.

4. Anneau de fixation selon l'une quelconque des revendications 1 à 3, **caractérisé en ce que** le noyau élastique se compose d'un anneau élastomère (10, 12).

5. Anneau de fixation selon la revendication 4, **caractérisé en ce que** l'anneau élastomère (12) est enduit ou floqué avec un matériau textile (13) au moins sur la surface qui est en contact avec le contenant à poser.

6. Anneau de fixation selon l'une quelconque des revendications 1 à 5, **caractérisé en ce que** le noyau se compose de fils élastomère qui sont incorporés dans le matériau textile.

7. Anneau de fixation selon l'une quelconque des revendications 1 à 6, **caractérisé en ce que** le matériau textile (4, 6, 7, 9) présente une configuration à la rigidité dépendante du sens et possède, dans le sens radial, une rigidité à la traction élevée et, dans le sens circonférentiel, une rigidité faible.

8. Anneau de fixation selon l'une quelconque des revendications 1 à 7, **caractérisé en ce que** l'organe de compensation se compose de plusieurs segments (4) en forme de croissant, se chevauchant partiellement, et composés d'un matériau textile strié et que le noyau élastique est disposé sous forme de corde (5) dans la strie.

9. Anneau de fixation selon l'une quelconque des revendications 1 à 8, **caractérisé en ce que** l'organe de compensation se compose d'au moins deux tronçons annulaires (6, 7) composés d'un matériau textile, et que le noyau est formé par des coutures (8) composées d'un matériau souple auxquelles les tronçons (6, 7) sont reliés radialement.

10. Anneau de fixation selon l'une quelconque des revendications 1 à 9, **caractérisé en ce que** l'organe de compensation se compose d'un matériau textile configuré sous forme de tronçon de boyau (9), et que le noyau élastique est formé par un enduit (11) composé d'un matériau élastomère qui rétrécit l'enveloppe et qui est appliqué sur le périmètre extérieur du tronçon de boyau (9).

11. Anneau de fixation selon l'une quelconque des revendications 1 à 9, **caractérisé en ce que** l'organe de compensation se compose d'un matériau textile configuré sous forme de tronçon de boyau (9), et que le noyau élastique est formé par un anneau élastomère (10) qui rétrécit l'enveloppe et qui est en contact avec le périmètre extérieur du tronçon de boyau.

12. Anneau de fixation selon l'une quelconque des revendications 1 à 11, **caractérisé en ce que** le matériau textile (4) se compose de plusieurs couches.
